# EUROPEAN PATENT SPECIFICATION

(11) **EP 1 957 178 B1**
(45) Date of publication and mention of the grant of the patent: **13.05.2009**
(21) Application number: 06808442.5
(22) Date of filing: 07.11.2006
(51) Int. Cl.: B01D 41/04, F01N 3/023, F01N 3/022

(54) **METHOD AND APPARATUS FOR CLEANING FILTERS**
VERFAHREN UND VORRICHTUNG ZUR REINIGUNG VON FILTERN
PROCÉDÉ ET APPAREIL SERVANT À NETTOYER DES FILTRES

(30) Priority: 08.12.2005 GB 0524989
(43) Date of publication of application: 20.08.2008
(73) Proprietor: Eminox Limited, The Old Court House Gainsborough Lincolnshire DN21 2BE (GB)
(72) Inventor: MILLES, David, Herbert, Lincolnshire LN8 3UR (GB)
(74) Representative: Swindell & Pearson
(86) International application number: PCT/GB2006/004147
(87) International publication number: WO 2007/066065

(56) References cited:
- EP-A- 1 060 780
- EP-A- 1 302 232
- FR-A1- 2 815 884
- JP-A- 2005 046 729
- US-A- 5 484 382

## Description

The present invention relates to a method and apparatus for cleaning vehicle exhaust system filters, and in particular wall flow filters such as continuously regenerating diesel particulate filters (CR-DPFs).

Modem diesel powered vehicle exhaust systems are often provided with filters for removing particulate matter from the vehicle's exhaust stream. These are typically wall flow filters which are cylindrical ceramic monoliths having elongate channels running along their length, parallel to the axis of the cylinder. The channels are alternately plugged at their ends such that gas entering a channel at one end cannot exit the same channel at its other end. To exit, the gas must pass from one channel to the next through the porous walls of the filter. In so doing, soot and ash within the gas are trapped on the walls of the filter.

A preferred filter for a modem diesel exhaust system is a continuously regenerating diesel particulate filter, in which exhaust heat and gases from the engine are used to cause the particulate matter to bum off the filter, thereby regenerating the filter.

The above described wall flow filters can become contaminated with soot and ash in the course of their operation on heavy duty diesel powered vehicles. Under normal conditions at elevated operating temperatures, such filters regenerate themselves and effectively self-clean, by soot being burnt out of the filter. However, under adverse conditions, for example where the vehicle undertakes a large amount of city driving resulting in lower exhaust gas temperatures, or after prolonged use, the filter can become blocked with particulate matter. Once the filter is blocked, even locally, it can experience an exothermic reaction which bums the material of the filter. If this happens, the integrity of the filter is damaged and its effectiveness reduced.

One way to prevent this is through a regular maintenance regime which includes periodic, typically annual, cleaning. Existing cleaning methods are time consuming and can be difficult to implement, and it would therefore be desirable to provide an improved method and apparatus for cleaning vehicle exhaust system filters. One existing cleaning method and apparatus is described in JP 2005 046 729 A.

According to a first aspect of the present invention, there is provided a method of cleaning a vehicle exhaust system filter including a plurality of generally parallel elongate channels, the method comprising introducing liquid into the elongate channels for absorption by particulate matter present in the channels, and rotating the filter such that the rotation causes the wetted particulate matter to move along, and out of, the elongate channels to thereby clean the filter.

The step of rotating the filter may induce a force on the wetted particulate matter in a direction extending along, and desirably substantially parallel to, the elongate channels to thereby move the wetted particulate matter along, and out of, the elongate channels.

The method is particularly applicable to cleaning a filter made of a porous material, which may be a ceramic material. The filter is desirably a wall flow filter, preferably in which the elongate channels extend between opposite ends of the filter, along the length thereof. The elongate channels are preferably alternately closed at their ends so that fluid entering a channel at an open end cannot exit the same channel at the opposite closed end, but instead must pass from one channel to adjacent channels through the porous filter material, and exit those adjacent channels through their open ends.

The filter preferably defines a central axis, extending between opposite ends of the filter, which is parallel to the axes of the elongate channels.

The step of introducing liquid into the elongate channels may comprise introducing liquid into the first end of the filter and may include directing liquid towards the first end the filter. The step of introducing liquid into the elongate channels may alternatively or additionally include introducing liquid into the second end of the filter and may include directing liquid towards the second end the filter.

The liquid is preferably water and may include a cleaning agent.

The step of rotating the filter may comprise rotating the filter about an axis substantially perpendicular to the central axis of the filter. The step of rotating the filter may comprise rotating the filter about the first end and about said axis to cause the wetted particulate matter to move radially outwardly from the axis of rotation, along the elongate channels, towards the second end of the filter and out of the channels at the second end.

The method may comprise simultaneously introducing the liquid into the elongate channels and rotating the filter.

The method may include conducting first and second cleaning cycles in which liquid is introduced into the elongate channels and the filter is rotated.

During the first cleaning cycle, the step of rotating the filter may comprise alternating the direction of rotation of the filter after short rotational movements to preferably provide a rockling motion about the axis of rotation. During the first cleaning cycle, the step of rotating the filter may alternatively or additionally comprise rotating the filter continuously in one direction, preferably at a first rotational speed, about the axis of rotation.

During the second cleaning cycle, the step of rotating the.filter may comprise rotating the filter continuously in one direction, preferably at a second rotational speed which is greater than the first rotational speed. The second rotational speed may be between 500 and 700 rev/min, and may be approximately 600 rev/min.

The step of conducting the second cleaning cycle may comprise rotating the filter at the second rotational speed for a predetermined period of time, which may be between 3 and 15 minutes, and which may be approximately five minutes.

The step of conducting the first cleaning cycle may comprise introducing liquid into the elongate channels at a first flow rate, and the step of conducting the second cleaning cycle may comprise introducing liquid into the elongate channels at a second flow rate. The second flow rate may be greater than the first flow rate.

The method may comprise repeating the first and second cleaning cycles to remove further particulate matter from the elongate channels.

The method may comprise detecting the quantity of particulate matter moving out of the elongate channels during the first cleaning cycle and may comprise initiating the second cleaning cycle when the detected quantity of particulate matter is less than a predetermined quantity. The method may comprise detecting the quantity of particulate matter moving out of the elongate channels during the second cleaning cycle and may comprise repeating the first and second cleaning cycles when the detected quantity of particulate matter is more than a predetermined quantity.

The method may comprise conducting a drying cycle to eject residual liquid from the elongate channels. The step of conducting the drying cycle may comprise rotating the filter without introducing liquid into the elongate channels.

The step of conducting the drying cycle may comprise rotating the filter at a third rotational speed, which may be greater than the second rotational speed. The third rotational speed may be between 500 and 1000 rev/min, and may be approximately 750 rev/min.

The step of conducting the drying cycle may comprise rotating the filter at the third rotational speed for a predetermined period of time, which may be between 3 and 10 minutes, and which may be approximately five minutes.

According to a second aspect of the present invention, there is provided apparatus for cleaning a vehicle exhaust system filter including a plurality of generally parallel elongate channels, the apparatus including means for introducing liquid into the elongate channels for absorption by particulate matter present in the channels, and means for rotating the filter to move the wetted particulate matter along, and out of, the elongate channels to thereby clean the filter.

The apparatus is particularly suitable for cleaning a filter as described above.

The filter preferably defines a central axis, extending between opposite ends of the filter, which is parallel to the axes of the elongate channels.

The apparatus may include a drum in which the filter may be mounted for rotation relative to the drum, desirably about an axis perpendicular to the central axis of the filter. The drum may define a rotational axis about which the filter may be rotatable, and the rotational axis may be substantially perpendicular to the central axis of the filter. Thus, the elongate channels extend radially outwardly from the rotational axis when the filter is mounted, in use, in the drum.

The means for introducing liquid into the elongate channels may include means for directing liquid towards a first end of the filter and/or means for directing liquid towards a second end the filter.

The apparatus may include a mounting arrangement for mounting the filter for rotation about the rotational axis, and may include a motor for rotating the mounting arrangement about the rotational axis. The mounting arrangement may be arranged to mount a plurality of filters for simultaneous rotation about the rotational axis.

The apparatus may include means for detecting the quantity of particulate matter flowing out of the elongate channels and may include a controller for controlling the means for introducing liquid into the elongate channels and/or the means for rotating the filter in response to the detected quantity of particulate matter.

An embodiment of the present invention will now be described by way of example only and with reference to the accompanying drawings, in which:-
Fig. 1 is a diagrammatic sectional view of a wall flow filter, such as a continuously regenerating diesel particulate filter (CR-DPF);
Fig. 2 is a diagrammatic sectional view of part of the filter of Fig. 1, showing the fluid flow path through the filter;
Fig. 3 is a diagrammatic end view of apparatus for cleaning a vehicle exhaust system filter according to the present invention; and
Fig. 4 is a diagrammatic side view of the apparatus of Fig. 3.

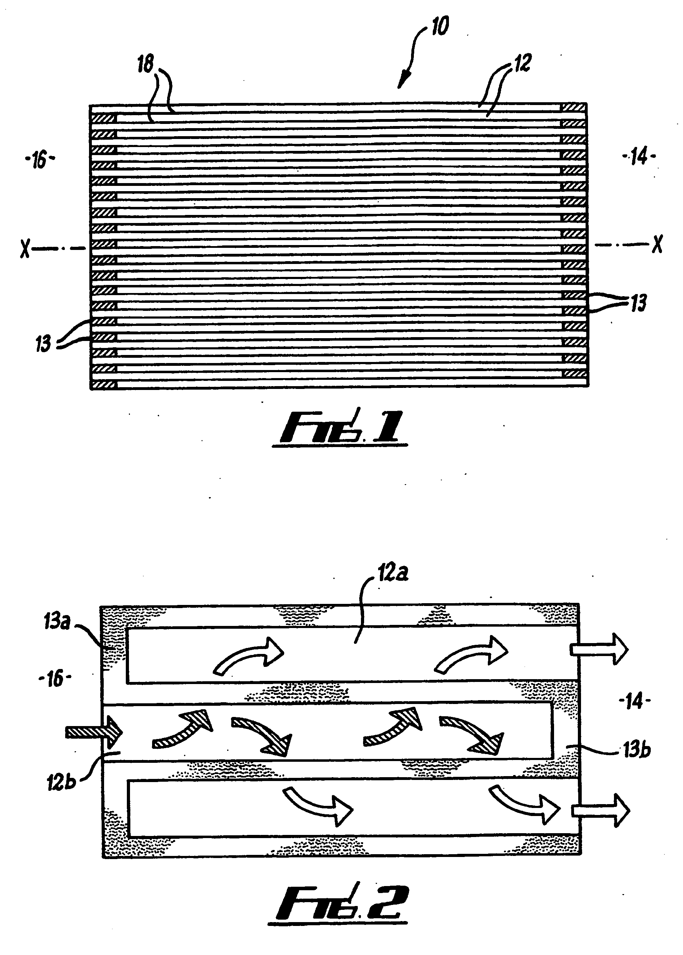

Referring to Figs. 1 and 2, there is shown in diagrammatic cross section a filter 10 for a vehicle exhaust system. The filter 10 is a "wall flow filter" and comprises a cylindrical body formed from porous material, typically ceramic material such as cordierite or silicon carbide.

The filter 10 is formed to include a plurality of parallel elongate channels 12, usually of a rectangular cross-section. The channels 12 extend parallel to a central axis X-X of the filter 10, from a first end 14 of the filter 10 to an opposite, second end 16. The channels 12 are separated by walls 18 of the porous, ceramic material of the filter 10.

The filter 10 is formed such that alternate ends of the adjacent channels 12 are closed by end plugs 13 formed of the same ceramic material as the remainder of the filter 10. Each channel 12 is therefore open at one of its ends (say at the first end 14 of the filter 10) and closed at its opposite end (say at the second end 16 of the filter 10). Adjacent channels 12 are open at the second end 16 of the filter and closed at the first end 14 of the filter 10.

In Fig. 2, it may be seen that the channel 12a is open at the first end 14 of the filter 10 and closed by a plug 13a at the second end 16 of the filter 10, whilst adjacent channel 12b is open at the second end 16 of the filter 10 and closed by a plug 13b at the first end 14.

The wall flow filter 10 is a standard component used in the automotive industry to remove particulate matter from vehicle exhaust streams. The exhaust gases pass through the filter 10 from one end (the second end 16) to the opposite end (the first end 14), through the channels 12. Because the channels 12 are alternately closed at their ends, as described above, gas entering one channel 12 cannot exit the same channel 12 at the opposite end of the filter 10, and instead must pass to adjacent channels 12 through the porous walls 18 of the filter 10, as illustrated in Fig. 2. In so doing, particulate matter in the form of soot or ash within the exhaust gases is trapped in the walls 18 of the filter 10 and also builds up in the channels 12 themselves.

It will be understood by those skilled in the art from Fig. 2 that when the exhaust gases flow through the filter 10 from the second end 16 to the first end 14, the particulate matter builds up in the channels 12 whose open ends are located at the second end 16 of the filter 10 (such as the channel 12b), where the exhaust gases enter the filter 10. The build up of particulate matter thus occurs only in the channels 12 whose open ends are located at the second end 16 of the filter 10 (such as the channel 12b), and not in the channels whose open ends are located at the first end 14 of the filter 10 (such as the channel 12a), due to the fact that the particulate matter is trapped by the walls 18.

The wall flow filter 10 is typically used in a heavy duty diesel powered vehicle. Over time, the filter 10 becomes contaminated with the soot and ash which is filtered from the exhaust stream. A continuously regenerating diesel particulate filter (CR-DPF) is designed such that heat from the vehicle exhaust causes the filter to self-clean by nitrogen dioxide reacting with the soot to "burn" it off the filter. However, under adverse conditions, for example if the vehicle exhaust does not routinely reach sufficiently high temperatures, or after prolonged use, the filter can become blocked. This can cause an exothermic reaction which burns the material of the filter. Blockages, and/or the subsequent damage to the filter material, can damage the integrity of the filter and impair its performance.

In view of the above, there is a requirement for regular maintenance and cleaning of the filters.

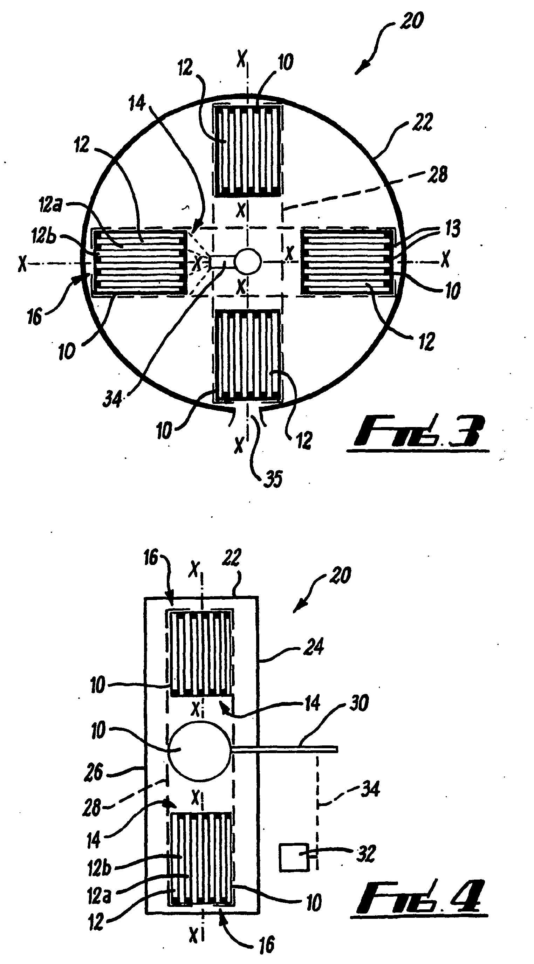

Referring to Figs. 3 and 4, there is shown diagrammatically apparatus 20 for cleaning vehicle exhaust system filters, and in particular wall flow filters 10 described above with reference to Figs. 1 and 2. The apparatus 20 includes a drum 22 into which one or more filters 10 to be cleaned are locatable. One end of the drum 22 is closed by a wall 24 whilst the other end of the drum 22 is closed by a door 26 which may be opened to allow access to the interior of the drum 22 so that filters 10 can be placed into and removed from the drum 22.

The apparatus 10 includes a mounting arrangement 28, illustrated diagrammatically by broken lines, in which one or more filters 10 to be cleaned are mountable, in the illustrated embodiment four filters 10. The mounting arrangement 28 may be adjustable so that filters 10 of different sizes can be easily accommodated.

The mounting arrangement 28 is mounted inside the drum 22 on a drive shaft 30 which may be rotated to thereby rotate the mounting arrangement 28, and hence the filters 10 mounted therein, relative to the drum 22, which remains stationary. The drive shaft 30 defines a rotational axis of the drum 22 about which the filters 10 are rotatable, in use. The rotational axis is substantially perpendicular to the central axis X-X of the filters 10 and therefore substantially perpendicular to the axes of each of the elongate channels 12 of the filters 10.

In order to rotate the drive shaft 30, and hence rotate the mounting arrangement 28 about the rotational axis, the apparatus 20 includes a motor 32. The motor 32 may be coupled to the drive shaft 30 by a suitable drive belt 34 or alternatively the rotating shaft of the motor 32 may constitute the drive shaft 30.

The apparatus 20 includes means for introducing liquid into the drum, such as a jet 34, which is arranged to direct fluid towards the first (radially inner) end 14 of each of the filters 10 to introduce liquid into the elongate channels 12, as will be described in detail hereinafter. The drum 22 includes a liquid outlet 35 for removing liquid contaminated with particulate matter from the drum 22.

The apparatus 20 is used as follows to clean filters 10.

One or more dirty filters 10 are securely located in the mounting arrangement 28 either before, or after, it is located inside the drum 22 on the drive shaft 30.

Each of the filters 10 must be located in the mounting arrangement 28 so that the channels 12 whose open ends were located on the entry side of the exhaust gases in the vehicle exhaust system, such as the channel 12b of Fig. 2, are positioned at the radially outer extremity of the mounting arrangement 28. In other words, the filters 10 are each located in the mounting arrangement 28 so that the second end 16 is located at the radially outer extremity of the mounting arrangement 28 and so that the first end 14 is located at the radially inner extremity of the mounting arrangement 28. This is easy to achieve in practice since the end of the filter 10 which has been located on the entry side of the exhaust gases (the second end 16 in Fig. 2) will appear dirty, whilst the opposite end (the first end 14 in Fig. 2) will appear clean.

After the mounting arrangement 28 has been located inside the drum 22 on the drive shaft 30, the door 26 is securely closed and the jet 34 is activated to direct liquid towards the first, radially inner, end 14 of each of the filters 10. The liquid is desirably water and may include appropriate cleaning agents to facilitate cleaning of the filters 10. The liquid may also be heated, if desired, to facilitate cleaning.

After the jet 34 has been activated, the apparatus 20 is used to perform first and second cleaning cycles, as follows.

In the first cleaning cycle, the mounting arrangement 28 is rotated by the drive shaft 30 so that the filters 10 are each rotated about their first, radially inner, end 14 and about the rotational axis of the drum 22 which is perpendicular to the central axis X-X of the filters 10, as aforesaid.

Initially, the first end 14 of one of the filters 10 is located adjacent the jet 34. Liquid is thus directed towards the first end 14 of this particular filter 10 and is introduced into the elongate channels 12, such as the channel 12a, whose open ends are located radially inwardly inside the drum 22, at the first end 14 of the filter 10. The liquid moves along these elongate channels 12 and through the walls 18 into adjacent channels 12 whose open ends are located radially outwardly inside the drum 22 at the second end 16 of the filter 10, such as the channel 12b. As the liquid flows through the walls 18, a proportion of the liquid is absorbed by particulate matter trapped in the walls 18 and present in the channels 12 to provide wetted particulate matter, and as a result the effective mass of the particulate matter increases.

In order to facilitate movement of the liquid through the channels 12 from the first end 14 towards the second end 16 of the filter 10 adjacent the jet 34, and hence the movement of particulate matter out of the channels 12 whose open ends are located at the second end 16 of the filter 10, the mounting arrangement 28 is rotated through small angles in alternate directions to provide the filter 10 adjacent the jet 34 with a rotational rocking motion, back and forth past the jet 34. This rocking motion may be performed so that the filter 10 is rocked back and forth past the jet 34 for any desired period of time, but it has been found that subjecting each filter 10 to four rocking movements past the jet 34, during a period of approximately thirty seconds, removes an adequate amount of particulate matter from the channels 12.

Each of the remaining filters 10 in the mounting arrangement 28 is subjected to the same wetting and rocking motion to complete the first cleaning cycle. The alternating rotational movement of the mounting arrangement 28 to provide the rocking motion may be provided by reversing the direction of rotation of the motor 32, or by manually rotating the drive shaft 30 in alternate directions.

During the first cleaning cycle, the liquid delivered by the jet 34, for introduction into the elongate channels 12 of the filters 10, may have a flow rate in the order of 16 litres/min.

The first cleaning cycle will only tend to remove relatively loose particulate matter from the channels 12 of the filters 10, and hence after the first cleaning cycle has been completed, the second cleaning cycle is initiated to remove further particulate matter.

In embodiments of the invention, the apparatus 10 includes means for detecting the quantity of particulate matter moving out of the elongate channels 12, and this means may comprise a photoelectric cell for detecting the quantity of particulate matter in the liquid flowing through the liquid outlet 35. When the photoelectric cell detects that the quantity of particulate matter flowing through the liquid outlet 35 is less than a predetermined quantity, which is indicative of the fact that the first cleaning cycle is unlikely to achieve the removal of further significant amounts of particulate matter, the second cleaning cycle may be initiated.

In the second cleaning cycle, the motor 32 is used to rotate the mounting arrangement 22 continuously in one direction and at a constant, relatively high speed, for example approximately 600 rev/min, for a predetermined period of time, such as five minutes.

Rotation of the filters 10 at relatively high speed about the rotational axis of the drum 22 subjects each of the filters 10 to a centripetal force, and consequently an equal and opposite centrifugal force. As this centrifugal force acts in a radially outward direction away from the rotational axis of the drum 22, and therefore in a direction parallel to the elongate channels 12, the wetted particulate matter, whose effective mass has been increased by the absorption of liquid in the first cleaning cycle, is moved under the action of the force along the channels 12 and out of the open ends of the channels 12, such as the channel 12b, at the second, radially outer, end 16 of each of the filters 10.

In order to promote the movement of the wetted particulate matter out of the channels 12, during the rotational movement liquid is continuously introduced, via the jet 34, into the elongate channels 12 whose open ends are located at the first, radially inner, end 14 of each filter 10 (such as the channel 12a) as each filter 10 passes the jet 34. If desired, the flow rate of the liquid introduced into the channels 12 of the filters 10, via the jet 34, may be increased from the flow rate indicated above. For example, a flow rate of up to 100 litres/min may be used.

Implementation of the first and second cleaning cycles, as described above, may be insufficient to remove an adequate amount of particulate matter from the filters 10 to render the filters 10 sufficiently clean for re-use in a vehicle exhaust system.

Accordingly, after the second cleaning cycle has been completed, it may be desirable to repeat the first and second cleaning cycles, as described above. The photoelectric cell may be used to initiate the repeat of the first and second cleaning cycles, in the manner described above, when the detected quantity of particulate matter moving out of the elongate channels 12 during the second cleaning cycle is more than a predetermined quantity.

After the first and second cleaning cycles have been repeated, the apparatus 20 is used to subject the filters 10 to a drying cycle to eject residual liquid from the elongate channels 12. During the drying cycle, the jet 34 is deactivated so that liquid is no longer supplied to the first, radially inner, end 14 of the filters 10. The speed of the motor 32 is increased to thereby increase the rotational speed of the mounting arrangement 28 and hence of the filters 10. In embodiments of the invention, the rotational speed may be increased to approximately 750 rev/min.

The centrifugal force acting on the filters 10 ejects residual water from the channels 12, and the walls 18, and it has been found that if the filters 10 are rotated at the above speed for a period of approximately five minutes, the filters 10 are dried to a sufficient extent that they may be immediately reused in a vehicle exhaust system, without the need for further drying.

The apparatus 20 desirably includes a suitable control arrangement for controlling the operation of the motor 32 and the liquid supplied by the jet 34, and for automatically initiating and switching between the first and second cleaning cycles and the drying cycle.

There is thus provided a method and apparatus for cleaning filters which offers significant advantages over known methods. In particular, the method and apparatus allow filters to be cleaned easily, with minimum user intervention, and therefore in a consistent manner which ensures the removal of a sufficient amount of particulate matter from filters to enable them to be reused in vehicle exhaust systems.

Although embodiments of the invention have been described in the preceding paragraphs with reference to various examples, it should be appreciated that various modifications to the examples given may be made without departing from the scope of the present invention.

For example, the first cleaning cycle may comprise rotating the mounting arrangement 28, and hence the filters 10, continuously in one direction at a relatively low rotational speed, as an alternative, or in addition, to rotating the mounting arrangement 28, and hence the filters 10, in alternate directions to provide a rocking action.

The apparatus 20 may include a plurality of jets 34 for introducing liquid into the elongate channels 12 at the first, radially inner, end 14 of the filters 10.

The apparatus 20 may additionally include means, such as one or more jets, for introducing liquid into the elongate channels 12 at the second, radially outer, end 16 of the filters 10. These jets may be mounted on the outer circumferential casing of the drum 22.

The mounting arrangement 28, and hence the filters 10, may be rotated at any suitable rotational speed and for any suitable period of time during the first and second cleaning cycles and during the drying cycle.

The drum 22 may include means for introducing a flow of air into the centre of the drum 22 during the drying cycle to facilitate drying of the filters 10.

## Claims

1. A method of cleaning a vehicle exhaust system filter (10) including a plurality of generally parallel elongate channels (12), the method comprising introducing liquid into the elongate channels (12) for absorption by particulate matter present in the channels (12), and rotating the filter (10) such that the rotation causes the wetted particulate matter to move along, and out of, the elongate channels (12) to thereby clean the filter (10).

2. A method according to claim 1, **characterised in that** the step of rotating the filter (10) induces a force on the wetted particulate matter in a direction extending along and substantially parallel to the elongate channels (12) to thereby move the wetted particulate matter along, and out of, the elongate channels (12).

3. A method according to any of the preceding claims, **characterised in that** the filter (10) defines a central axis, extending between opposite ends of the filter (10), which is parallel to the axes of the elongate channels and the step of rotating the filter comprises rotating the filter about an axis substantially perpendicular to the central axis of the filter, and about a first end (14) of the filter to cause the wetted particulate matter to move radially outwardly from the axis of rotation, along the elongate channels (12), towards a second end (16) of the filter and out of the channels at the second end (16).

4. A method according to any of the preceding claims, **characterised in that** the method includes conducting first and second cleaning cycles in which liquid is introduced into the elongate channels (12) and the filter (10) is rotated.

5. A method according to claim 4, **characterised in that** during the first cleaning cycle, the step of rotating the filter comprises alternating the direction of rotation of the filter after short rotational movements to provide a rocking motion about the axis of rotation.

6. A method according to claim 4, **characterised in that** during the first cleaning cycle, the step of rotating the filter (10) comprises rotating the filter (10) continuously in one direction, at a first rotational speed, about the axis of rotation, and during the second cleaning cycle, the step of rotating the filter (10) comprises rotating the filter (10) continuously in one direction, at a second rotational speed which is greater than the first rotational speed.

7. A method according to any of claims 4 to 6, **characterised in that** the step of conducting the first cleaning cycle comprises introducing liquid into the elongate channels (12) at a first flow rate, and the step of conducting the second cleaning cycle comprises introducing liquid into the elongate channels (12) at a second flow rate which is greater than the first flow rate.

8. A method according to any of claims 4 to 7, **characterised in that** the method comprises detecting the quantity of particulate matter moving out of the elongate channels (12) during the first cleaning cycle and initiating the second cleaning cycle when the detected quantity of particulate matter is less than a predetermined quantity.

9. A method according to claim 8, **characterised in that** the method comprises detecting the quantity of particulate matter moving out of the elongate channels (12) during the second cleaning cycle and repeating the first and second cleaning cycles when the detected quantity of particulate matter is more than a predetermined quantity.

10. A method according to any of the preceding claims, **characterised in that** the method comprises conducting a drying cycle to eject residual liquid from the elongate channels, the drying cycle comprising rotating the filter (10) without introducing liquid into the elongate channels (12).

11. A method according to claim 5, **characterised in that** the step of conducting the drying cycle comprises rotating the filter (10) at a third rotational speed, which is greater than the second rotational speed.

12. Apparatus for cleaning a vehicle exhaust system filter (10) including a plurality of generally parallel elongate channels (12), the apparatus (20) including means (34) for introducing liquid into the elongate channels (12) for absorption by particulate matter present in the channels (12), the apparatus being **characterised by** means (30) for rotating the filter (10) to move the wetted particulate matter along, and out of, the elongate channels (12) to thereby clean the filter (10).

13. Apparatus according to claim 12, **characterised in that** the filter (10) defines a central axis, extending between opposite ends of the filter (10), which is parallel to the axes of the elongate channels (12) and the apparatus (20) includes a drum (22) in which the filter (10) may be mounted for rotation relative to the drum (22), about an axis perpendicular to the central axis of the filter.

14. Apparatus according to claims 12 or 13, **characterised in that** the apparatus (20) includes a mounting arrangement (28) for mounting the filter (10) for rotation about the rotational axis, and a motor (32) for rotating the mounting arrangement (28) about the rotational axis.

15. Apparatus according to any of claims 12 to 14, **characterised in that** the apparatus includes means for detecting the quantity of particulate matter flowing out of the elongate channels, and a controller for controlling the means (34) for introducing liquid into the elongate channels (12) and/or the means (30) for rotating the filter in response to the detected quantity of particulate matter.

## Patentansprüche

1. Verfahren zum Reinigen eines Fahrzeug-Abgassystem-Filters (10) mit einer Vielzahl vorwiegend paralleler länglicher Kanäle (12), wobei das Verfahren aufweist: Einführen von Flüssigkeit in die länglichen Kanäle (12) zur Absorption durch in den Kanälen (12) vorhandenes Partikel-Material; und Rotieren des Filters (10) derart, dass die Rotation eine Bewegung des benetzten Partikel-Materials entlang der länglichen Kanäle (12) und aus ihnen heraus bewirkt, um den Filter (10) **dadurch** zu reinigen.

2. Verfahren nach Anspruch 1, **dadurch gekennzeichnet, dass** der Schritt des Rotierens des Filters (10) eine Kraft auf das benetzte Partikel-Material in einer sich entlang und im wesentlichen parallel zu den länglichen Kanälen (12) erstreckenden Richtung induziert, um das benetzte Partikel-Material **dadurch** entlang der länglichen Kanäle (12) und aus ihnen heraus zu bewegen.

3. Verfahren nach einem der vorhergehenden Ansprüche, **dadurch gekennzeichnet, dass** der Filter (10) eine sich zwischen entgegengesetzten Enden des Filters (10) erstreckende mittige Achse bestimmt, die zu den Achsen der länglichen Kanäle parallel ist; und dass der Schritt des Rotierens des Filters ein Rotieren des Filters um eine sich im wesentlichen senkrecht zur mittigen Achse des Filters erstreckende Achse und um ein erstes Ende (14) des Filters herum aufweist, um eine Bewegung des benetzten Partikel-Materials von der Rotationsachse aus entlang der länglichen Kanäle (12) radial nach außen zu einem zweiten Ende (16) des Filters hin und bei dem zweiten Ende (16) aus den Kanälen heraus zu bewirken.

4. Verfahren nach einem der vorhergehenden Ansprüche, **dadurch gekennzeichnet, dass** das Verfahren das Durchführen eines ersten und eines zweiten Reinigungszyklus beinhaltet, wobei in die länglichen Kanäle (12) Flüssigkeit eingeleitet wird und der Filter (10) rotiert wird.

5. Verfahren nach Anspruch 4, **dadurch gekennzeichnet, dass** während des ersten Reinigungszyklus der Schritt des Rotierens des Filters ein Abwechseln der Rotationsrichtung des Filters nach kurzen Rotationsbewegungen aufweist, um eine Schaukelbewegung um die Rotationsachse herum zu erzeugen.

6. Verfahren nach Anspruch 4, **dadurch gekennzeichnet, dass** während des ersten Reinigungszyklus der Schritt des Rotierens des Filters (10) ein kontinuierliches Rotieren des Filters (10) in einer Richtung mit einer ersten Rotationsgeschwindigkeit um die Rotationsachse herum aufweist; und dass während des zweiten Reinigungszyklus der Schritt des Rotierens des Filters (10) ein kontinuierliches Rotieren des Filters (10) in einer Richtung mit einer zweiten Rotationsgeschwindigkeit aufweist, die größer als die erste Rotationsgeschwindigkeit ist.

7. Verfahren nach einem der Ansprüche 4 bis 6, **dadurch gekennzeichnet, dass** der Schritt des Durchführens des ersten Reinigungszyklus ein Einleiten von Flüssigkeit in die länglichen Kanäle (12) mit einer ersten Strömungsgeschwindigkeit aufweist; und dass der Schritt des Durchführens des zweiten Reinigungszyklus ein Einleiten von Flüssigkeit in die länglichen Kanäle (12) mit einer zweiten Strömungsgeschwindigkeit aufweist, die größer als die erste Strömungsgeschwindigkeit ist.

8. Verfahren nach einem der Ansprüche 4 bis 7, **dadurch gekennzeichnet, dass** das Verfahren aufweist: Erfassen der Menge an Partikel-Material, das sich während des ersten Reinigungszyklus aus den länglichen Kanälen herausbewegt; und Auslösen des zweiten Reinigungszyklus, wenn die erfasste Menge an Partikel-Material mehr als eine vorbestimmte Menge ist.

9. Verfahren nach Anspruch 8, **dadurch gekennzeichnet, dass** das Verfahren aufweist: Erfassen der Menge an Partikel-Material, das sich während des zweiten Reinigungszyklus aus den länglichen Kanälen herausbewegt; und Wiederholen des ersten und des zweiten Reinigungszyklus, wenn die erfasste Menge an Partikel-Material mehr als eine vorbestimmte Menge ist.

10. Verfahren nach einem der vorhergehenden Ansprüche, **dadurch gekennzeichnet, dass** das Verfahren einen Trocknungszyklus zum Ausstoßen von Restflüssigkeit aus den länglichen Kanälen aufweist, wobei der Trocknungszyklus ein Rotieren des Filters (10) ohne Einleiten von Flüssigkeit in die länglichen Kanäle (12) aufweist.

11. Verfahren nach Anspruch 5, **dadurch gekennzeichnet, dass** der Schritt des Durchführens des Trocknungszyklus ein Rotieren des Filters (10) mit einer dritten Rotationsgeschwindigkeit aufweist, die größer als die zweite Rotationsgeschwindigkeit ist.

12. Vorrichtung zum Reinigen eines Fahrzeug-Abgassystem-Filters (10) mit einer Vielzahl vorwiegend paralleler länglicher Kanäle (12), wobei die Vorrichtung (20) aufweist: ein Mittel (34) zum Einführen von Flüssigkeit in die länglichen Kanäle (12) zur Absorption durch in den Kanälen (12) vorhandenes Partikel-Material; und ein Mittel (30) zum Rotieren des Filters (10) zur Bewegung des benetzten Partikel-Materials entlang der länglichen Kanäle (12) und aus ihnen heraus, um den Filter (10) **dadurch** zu reinigen.

13. Vorrichtung nach Anspruch 12, **dadurch gekennzeichnet, dass** der Filter (10) eine sich zwischen entgegengesetzten Enden des Filters (10) erstreckende mittige Achse bestimmt, die zu den Achsen der länglichen Kanäle (12) parallel ist; und dass die Vorrichtung (20) eine Trommel (22) enthält, in welcher der Filter (10) relativ zur Trommel (22) um eine Achse senkrecht zur mittigen Achse des Filters rotierbar montiert werden kann.

14. Vorrichtung nach Anspruch 12 oder 13, **dadurch gekennzeichnet, dass** die Vorrichtung (20) eine Montieranordnung (28) enthält, um den Filter (10) um die Rotationsachse herum rotierbar zu montieren; und einen Motor (32) enthält, um die Montieranordnung (28) um die Rotationsachse herum zu rotieren.

15. Vorrichtung nach einem der Ansprüche 12 bis 14, **dadurch gekennzeichnet, dass** die Vorrichtung aufweist: ein Mittel zum Erfassen der Menge an Partikel-Material, das aus den länglichen Kanälen herausströmt; und eine Steuerungseinrichtung zum Steuern des Mittels (34) zum Einführen von Flüssigkeit in die länglichen Kanäle (12) und/oder des Mittels (30) zum Rotieren des Filters als Reaktion auf die erfasste Menge an Partikel-Material.

## Revendications

1. Procédé de nettoyage d'un système de filtre d'échappement de véhicule (10) incluant une pluralité de canaux allongés généralement parallèles (12), le procédé comprenant une étape consistant à introduire dans les canaux allongés (12) un liquide destiné à être absorbé par la matière particulaire présente dans les canaux (12), et à faire tourner le filtre (10) de façon à ce que la rotation fasse se déplacer longitudinalement la matière particulaire mouillée, et la fasse sortir des canaux allongés (12) pour ainsi nettoyer le filtre (10).

2. Procédé selon la revendication 1, **caractérisé en ce que** l'étape consistant à faire tourner le filtre (10) induit une force s'exerçant sur la matière particulaire mouillée dans une direction longitudinale et sensiblement parallèle aux canaux allongés (12) afin de déplacer ainsi longitudinalement la matière particulaire mouillée et la faire sortir des canaux allongés (12).

3. Procédé selon l'une quelconque des revendications précédentes, **caractérisé en ce que** le filtre (10) définit un axe central, qui s'étend entre les extrémités opposées du filtre (10), qui est parallèle aux axes des canaux allongés et l'étape consistant à faire tourner le filtre consiste à faire tourner le filtre autour d'un axe sensiblement perpendiculaire à l'axe central du filtre, et autour d'une première extrémité (14) du filtre pour faire se déplacer radialement la matière particulaire mouillée en l'éloignant de l'axe de rotation, le long des canaux allongés (12) et en direction d'une deuxième extrémité (16) du filtre et en la faisant sortir des canaux au niveau de la deuxième extrémité (16).

4. Procédé selon l'une quelconque des revendications précédentes, **caractérisé en ce que** le procédé inclut l'étape consistant à effectuer les premier et deuxième cycles de nettoyage dans lesquels le liquide est introduit dans les canaux allongés (12) et le filtre (10) est mis en rotation.

5. Procédé selon la revendication 4, **caractérisé en ce que** pendant le premier cycle de nettoyage, l'étape consistant à faire tourner le filtre consiste à faire alterner le sens de rotation du filtre après de courts mouvements de rotation pour assurer un mouvement de balancement autour de l'axe de rotation.

6. Procédé selon la revendication 4, **caractérisé en ce que** pendant le premier cycle de nettoyage, l'étape consistant à faire tourner le filtre consiste à faire tourner le filtre (10) en continu dans un sens, à une première vitesse de rotation autour de l'axe de rotation, et pendant le deuxième cycle de nettoyage, l'étape consistant à faire tourner le filtre (10) consiste à faire tourner le filtre (10) en continu dans un sens, à une deuxième vitesse de rotation qui est supérieure à la première vitesse de rotation.

7. Procédé selon l'une quelconque des revendications 4 à 6, **caractérisé en ce que** l'étape consistant à effectuer le premier cycle de nettoyage consiste à introduire le liquide dans les canaux allongés (12) à un premier débit, et l'étape consistant à effectuer le deuxième cycle de nettoyage consiste à introduire le liquide dans les canaux allongés (12) à un deuxième débit qui est supérieur au premier débit.

8. Procédé selon l'une quelconque des revendications 4 à 7, **caractérisé en ce que** le procédé consiste à détecter la quantité de matière particulaire qui sort des canaux allongés (12) pendant le premier cycle de nettoyage et à démarrer le deuxième cycle de nettoyage lorsque la quantité de matière particulaire détectée est inférieure à une quantité prédéterminée.

9. Procédé selon la revendication 8, **caractérisé en ce que** le procédé consiste à détecter la quantité de matière particulaire sortant des canaux allongés (12) pendant le deuxième cycle de nettoyage et à répéter les premier et deuxième cycles de nettoyage lorsque la quantité de matière particulaire détectée est supérieure à une quantité prédéterminée.

10. Procédé selon l'une quelconque des revendications précédentes, **caractérisé en ce que** le procédé comprend l'étape consistant à effectuer un cycle de séchage pour éjecter le liquide résiduel des canaux allongés, le cycle de séchage comprenant l'étape consistant à faire tourner le filtre (10) sans introduire de liquide dans les canaux allongés (12).

11. Procédé selon la revendication 5, **caractérisé en ce que** l'étape consistant à effectuer le cycle de séchage consiste à faire tourner le filtre (10) à une troisième vitesse de rotation, qui est supérieure à la deuxième vitesse de rotation.

12. Appareil pour nettoyer un filtre d'échappement de véhicule (10) incluant une pluralité de canaux allongés généralement parallèles (12), l'appareil (20) incluant un moyen (34) permettant d'introduire dans les canaux allongés (12) le liquide destiné à absorber la matière particulaire présente dans les canaux (12), l'appareil étant **caractérisé par** un moyen (30) permettant de faire tourner le filtre (10) pour déplacer longitudinalement la matière particulaire mouillée et la faire sortir des canaux allongés (12) pour ainsi nettoyer le filtre (10).

13. Appareil selon la revendication 12, **caractérisé en ce que** le filtre (10) définit un axe central, s'étendant entre les extrémités opposées du filtre (10), qui est parallèle aux axes des canaux allongés (12) et l'appareil (20) inclut un tambour (22) dans lequel le filtre (10) peut être monté pour tourner par rapport au tambour (22), autour d'un axe perpendiculaire à l'axe central du filtre.

14. Appareil selon les revendications 12 ou 13, **caractérisé en ce que** l'appareil (20) inclut un dispositif de montage (28) permettant de monter le filtre (10) pour qu'il tourne autour de l'axe de rotation, et un moteur (32) destiné à faire tourner le dispositif de montage (28) autour de l'axe de rotation.

15. Appareil selon l'une quelconque des revendications 12 à 14, **caractérisé en ce que** l'appareil inclut un moyen permettant de détecter la quantité de matière particulaire sortant des canaux allongés, et un organe de commande pour commander le moyen (34) permettant d'introduire le liquide dans les canaux allongés (12) et/ou le moyen (30) permettant de faire tourner le filtre en fonction de la quantité de matière particulaire qui a été détectée.
